# EUROPEAN PATENT APPLICATION

(11) **EP 1 681 894 A2**
(43) Date of publication of application: **19.07.2006**
(21) Application number: 06250031.9
(22) Date of filing: 05.01.2006
(51) Int. Cl.: H04Q 7/38

(54) **Telecommunications services apparatus and method**

(30) Priority: 12.01.2005 GB 0500552
(71) Applicant: INTELLPROP LIMITED, Guernsey, Channel Islands (GB)
(72) Inventor: Wilson, Jeffrey, Fareham Hampshire PO16 7UH (GB)
(74) Representative: Robinson, Simon John

(57) **Abstract**

Telecommunications services apparatus for use with a mobile telecommunications network wherein the apparatus is configured to receive a routing information request message (10, 12) that is addressed to a HLR (3) and contains a destination number (8), the apparatus being further configured to provide a response (18) to the routing information request message such that an associated voice call addressed to the first destination number is routed to the apparatus, wherein, in use, the apparatus is (i) adapted to receive a routing information request message forwarded to the apparatus by the HLR, is (ii) adapted to filter routing information request messages to the HLR before reaching the HLR, or is (iii) adapted to receive a routing information request message which has been selectively ported out to the apparatus based on the destination number.

## Description

### FIELD OF INVENTION:

This invention relates to a telecommunications services apparatus and method for use with a mobile telecommunications system, such as a mobile telephone system. The invention is applicable in particular to the forwarding, interception, recording or other processing of voice calls in the GSM mobile telephony system, although in principle the technique could be applied to other types of mobile network.

### BACKGROUND TO THE INVENTION:

Voice services are prevalent in modern telecommunications networks and in most cases are still the largest revenue-earner for operators. Networks handle a large volume of voice traffic in a variety of categories, for example, person-to-person, Freephone and Premium Rate. Mobile telephone networks predominantly handle person-to-person voice traffic while non-geographic destinations are in general passed to a local fixed line operator via a telecommunications interconnect.

A number of mobile telecommunications standards exist worldwide including GSM (Global Systems for Mobile Communications) and CDMA (Code Division Multiple Access). In addition to supporting voice calls between mobile terminals, GSM also supports calls to and from the fixed network, and to other types of service or equipment addressable within the numbering plan. The numbering plan includes both long numbers and short codes. Voice interconnection between fixed networks, GSM networks and CDMA networks is almost universally available.

The present invention is preferably applicable to any type of mobile telecommunication network although the following is described in the context of a GSM network.

GSM networks are specified in the relevant standards and these define that GSM voice calls are handled within the network in a similar way to ISDN calls, with the enhancement that mobility is permitted for the user terminals. GSM specifies call-forwarding options that allow the recipient to divert his calls to voicemail or to another number under various conditions such as busy or out of coverage.

In present networks, the call set-up procedure is well defined by the standards. Intelligent Network (IN) techniques may be invoked either in the mobile originated leg or the mobile terminated leg of the call. In either case, a Service Control Point (SCP) can take control of call management. IN procedures are typically invoked for pre-pay subscribers where the IN is used to interrogate the caller's and the called party's credit balance. Mobile Number Portability (MNP) may also be implemented using IN techniques.

During the set-up of the mobile terminated leg of the call, the call forwarding settings for the recipient are invoked according to the outcome of the call set-up. This may result in the call being diverted to a voice mailbox or to an alternative number. In some networks, Operator Controlled Call Forwarding (OCCF) is available as a lower priority divert in the event that an appropriate user divert is not set up. If no call forwarding condition is configured for the outcome of the call set up, then an appropriate call progress tone or announcement may be returned to the caller indicating for example that the user is busy or unavailable.

A technique known as Virtual Mobile works by providing a Home Location register (HLR) function for a virtual telephone number, ie one that is not necessarily associated with a physical telephone terminal. The standard routing operations of GSM deliver a call or message to the correct network node by querying the HLR in order to determine the location of a telephone. By arranging for the HLR to respond to queries relating to Virtual Mobile numbers by returning the address of a network node designated for handling Virtual Mobile calls or messages, access to this network node becomes possible from any network. Virtual Mobile allows text messages addressed to host equipment in a network A to be sent from any network. Virtual Mobile systems to date have been focussed on text connectivity although the technique of voice call re-direction is known. Voice call re-direction allows a normal voice telephone call to be made to a Virtual Mobile number.

It is also known that text to voice sub-systems in some networks allow a text message to be delivered as a spoken message in normal voice call.

UK Patent Application GB 0128721.8 describes a means for directing incoming voice calls via a voice-services equipment for the purpose of providing advanced services.

It would be desirable for an operator to be able to provide a higher quality of service, at least to its most valuable customers, particularly in respect of enhanced voice services such as intelligent redirection, or call recording, but there is at present no straightforward means to do this. Application of services to outgoing calls is relatively simple, because the originator can use a dialled number or a short-code dialling prefix, for example, to cause the call to be routed via the desired service. However incoming calls are much more difficult to control, as the calls may arrive from any network via a variety of types of route. Although the techniques described in GB 0128721.8 provide a mechanism in principle for intercepting incoming voice calls, interception and diversion of Send Routing Information (SRI) messages is required, which is itself not straightforward.

With the increasing use of virtual numbers to address personal devices such as data cards and PDAs (Personal Digital Assistants), the lack of standardised facilities for providing diversion is becoming increasingly apparent. Mobile telephony for business use is particularly disadvantaged, because a recipient has no way to ensure that calls addressed to his multiple devices can be conveniently received by a single device. For example, many business users have both a mobile telephone and a personal telephone. While it is possible to divert voice calls from one handset to the other, this may be undesirable because text messages cannot normally be diverted in the same way. A better solution would be one that could deal with the redirection of both text and voice communications addressed to a given MSISDN.

Telecommunications services in general may be controlled to some degree by the sender or by the receiver. The communication content, the communication medium and the timing of transmission are normally under the control of the sender, however the recipient may influence the delivery of a communication by activating a storage facility such as voicemail or by switching his phone off. Generally, the facilities available to a recipient for control of incoming communications are quite limited.

The present invention seeks to solve some of these problems, particularly in relation to improving the flexibility of services for the recipient in respect of incoming voice calls. Such services may be applied for the benefit of premium subscribers only or may be applied to an operator's entire user base. In particular the present invention provides a simple and economic solution to the difficulty of obtaining recipient control over all received voice calls.

### STATEMENT OF INVENTION:

According to a first aspect of the invention there is provided telecommunications services apparatus for use with a mobile telecommunications network wherein the apparatus is configured to receive a routing information request message that is addressed to a HLR and contains a destination number, the apparatus being further configured to provide a response to the routing information request message such that an associated voice call addressed to the first destination number is routed to the apparatus, wherein, in use, the apparatus is (i) adapted to receive a routing information request message forwarded to the apparatus by the HLR, is (ii) adapted to filter routing information request messages to the HLR before reaching the HLR, or is (iii) adapted to receive a routing information request message which has been selectively ported out to the apparatus based on the destination number.

According to a second aspect of the invention there is provided a method of obtaining access to, or intercepting, voice calls on behalf of a recipient subscriber, the method employing a telecommunications services apparatus and the method comprising
- (i): forwarding from a HLR a routing information request message to the telecommunications services apparatus, or
- (ii): the telecommunications services apparatus filtering a routing information request message addressed to the HLR before the messages reach the HLR, or

- (iii): selectively porting out to the telecommunications services apparatus a routing information request based on the number of the recipient subscriber,
and the telecommunications services apparatus replying to the routing information request on behalf of the HLR so that the call is routed through said apparatus.

According to a third aspect of the invention there is provided a data carrier provided with instructions to control a data processor of telecommunications services equipment and the instructions being such that, in use, when loaded onto the telecommunications services equipment, the data processor provides a response to a routing information request addressed to a HLR such that an associated voice call addressed to a destination number is routed to the apparatus.

The data carrier may comprise an optical data storage device (eg a CD, a DVD) or a semi-conductor data storage device or a magnetic data storage device.

A further aspect of the invention relates to a telecommunications network.

In one embodiment of the invention there is provided a telecommunications services apparatus for use with a mobile telecommunications network wherein the apparatus is operable to receive a routing information request message that is addressed to an HLR and contains a first destination number, to provide a response to the routing information request message such that an associated voice call addressed to the first destination number is routed to the apparatus, wherein the routing information request message is forwarded to the apparatus by the HLR.

The routing information request message is preferably a MAP Send Routing Information (SRI) message.

The routing information request message is preferably forwarded to the apparatus by the HLR, either for all subscribers, or optionally only for those subscribers for whom an advanced voice service is provisioned.

Preferably the HLR does not forward an SRI message to the apparatus if the SRI message itself originated from the apparatus.

The apparatus is preferably operable to optionally process the received voice call prior to onward routing and/or for all or part of its duration.

The apparatus is preferably operable to query the HLR using a Send Routing Information (SRI) message in order to determine a network node address for onward routing of the voice call.

The apparatus may route the voice call onward to the network node address.

### BRIEF DESCRIPTION OF DRAWINGS:

Various embodiments of the invention will now be described by way of example only with reference to the accompanying drawings, throughout which like parts are referred to by like references, and in which:

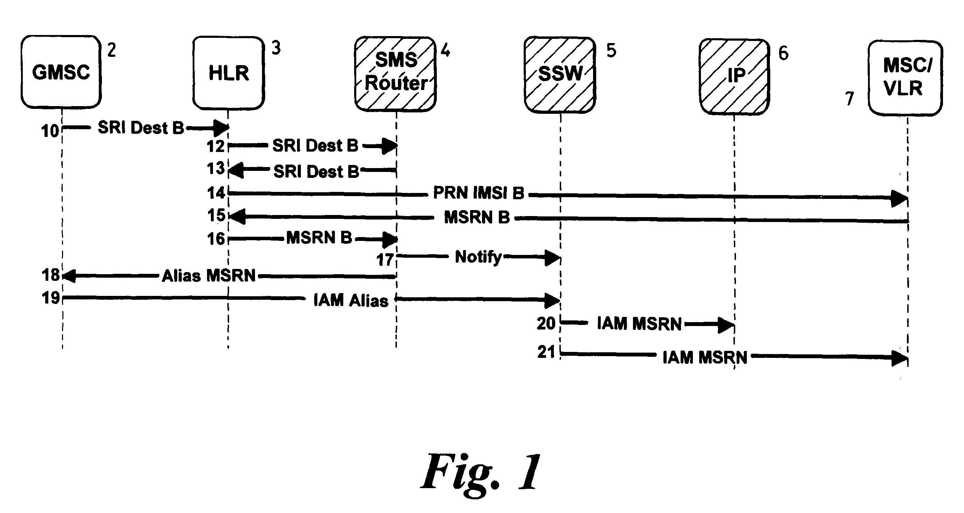

Figure 1 shows a ladder diagram of a preferred messaging flow illustrating a call between an A-party 1 and a B-party 8. The GMSC (Gateway Mobile Switching Centre) 2 is the switching centre that is making a mobile terminated call attempt. The HLR 3 is the Home Location Register for the B-party subscriber. The SMS Router 4 provides MAP message origination and termination capability and a programmable application environment. It also connects to the Services Switch (SSW) 5 which is a voice switch optimised for transparently switching calls while simultaneously providing feed a summed copy of the call legs to an external recording equipment 6. In Figure 1:
   Arrow 10 shows an original SRI query from the GMSC 2.
   Arrow 12 shows the SRI query forwarded by the HLR 3.
   Arrow 13 shows a new SRI query from the SMS Router 4.
   Arrow 14 shows a Provide Roaming Number (PRN) query from the HLR to the Mobile Switching Centre (MSC)/Visitor Location Register (VLR) 7 where the B-party is located.
   Arrow 15 shows the response to the PRN, which contains a Mobile Station Roaming Number (MSRN) indicating the routing address of the MSC/VLR.
   Arrow 16 shows the response to the SRI in arrow 3, which returns the MSRN to the SMS Router.
   Arrow 17 shows the SMS Router notifying the SSW 5 of the B number and the MSRN number.
   Arrow 18 shows the SMS Router providing an alias response to the SRI in arrow 12. This response contains the apparatus routing address as the alias MSRN instead of the B-party's VLR routing address.
   Arrow 19 shows an ISDN User Part (ISUP) call set-up to the apparatus, and the call being routed to the SSW.
   Arrow 20 shows the SSW optionally connecting to an external IP 6 for call recording.
   Arrow 21 shows the call being forwarded to the original MSRN, which is the MSC/VLR address where the recipient is located.

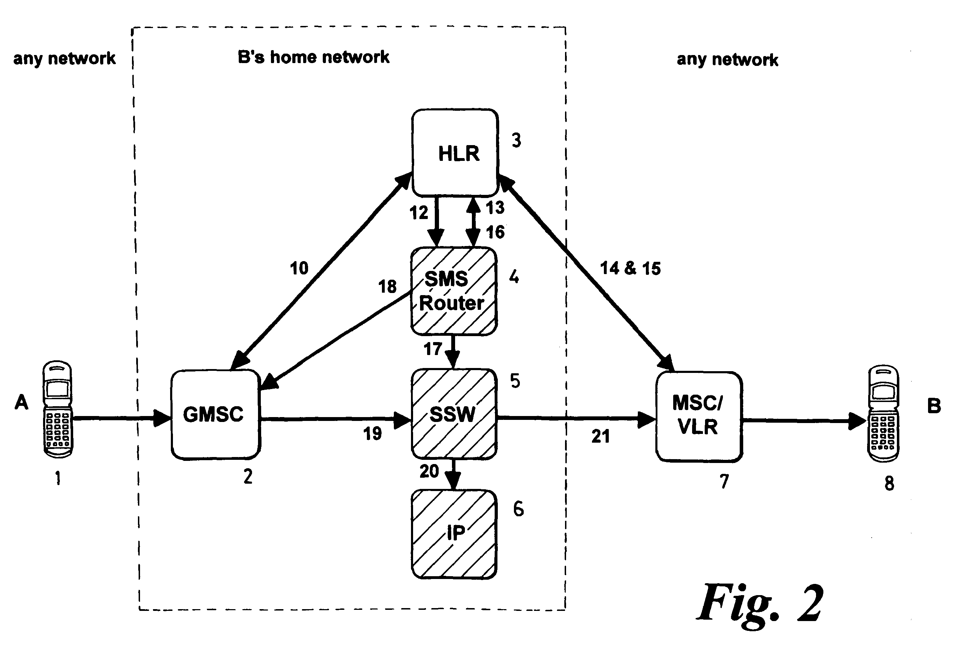

   In Figure 2, the same notation is used, but the logical connectivity between the functional entities is shown in the form of a block diagram.

### DETAILED DESCRIPTION OF EXEMPLARY EMBODIMENTS:

The present invention solves the problem of obtaining access to, or intercepting, incoming voice calls on behalf a recipient subscriber. In a standard network architecture this is difficult and normally would require a complex Intelligent Network (IN) or Camel implementation. Typically, where an IN exists in a mobile network, it is already complex, and often involved with pre-pay billing. Therefore making modifications to the IN may be risky and undesirable. A preferred embodiment of the present invention adopts a similar technique to that which may be used for intercepting mobile terminated SMS. The technique involves intercepting a routing query to the HLR that precedes the delivery of the communication to the recipient. The technique is well described in GB 0128721.8, however the present invention provides a simpler and more effective means to pass voice routing queries to the apparatus. The invention therefore allows SRI messages to be received by the apparatus, and replies to be sent by the apparatus on behalf of the HLR. This allows the apparatus to cause the subsequent incoming voice calls to be routed to the apparatus, enabling the implementation of advanced voice services on the apparatus. The invention may therefore be viewed as a means to support the selective implementation of advanced voice services.

For voice calls in GSM, the routing query is a Mobile Application Part (MAP) message called Send Routing Information (SRI). Equivalent routing queries exist in other mobile technologies. The SRI normally passes between the GMSC in the recipient's network that is handling the terminating call leg, and the recipient's HLR. In a preferred embodiment, a small modification is made to the HLR so that for subscribers for whom advanced voice services have been provisioned, or optionally for all subscribers, these SRI messages are not processed in the usual way by the HLR, but instead are forwarded to the apparatus.

The preferred equipment for implementing the apparatus of the invention comprises an SMS Router, which has MAP message processing capability, a Voice Services switch (SSW) and an Intelligent Peripheral (IP) such as the Telsis fastIP (RTM). The fastIP provides up to 3000 hours of recording capacity. These functions of the apparatus may be logically or physically separate, or may be combined into fewer equipments. In a preferred embodiment, the SMS Router, SSW and fastIP are separate equipments that may be mounted in a single rack.

### HLR forwarding technique

In a preferred embodiment the HLR is modified so that subscribers who are to benefit from an enhanced voice services, or from a class of service that includes enhanced voice services, can be identified in some way using part of their stored subscription information.

### The HLR preferably needs to provide the following support:

For each subscriber, the operator must be able to provision an indicator indicating that the subscriber should be allowed to use advanced voice services. This may preferably be a Class of Service indicator.

For each SRI message received (except those originating from the apparatus), the HLR should check the above indicator to determine whether the associated destination number has the necessary Class of Service. If it has, then the HLR should forward the message to the apparatus, regardless of the availability or status of the subscriber.

### Other techniques for SRI capture

Alternative methods of arranging for SRI messages to arrive at the apparatus include-
1. Using number portability mechanisms. By 'porting out' premium subscribers to an alternative HLR address in the same network, where said address is actually an address of the apparatus, it can be arranged that the special processing of certain messages can be carried out by the apparatus, while allowing the real subscriber data record to remain on its original HLR. Other message types are forwarded transparently to the HLR.
2. Using interception techniques, where the apparatus is placed logically in-line with the HLR, so that it can filter and process selected messages before they reach the HLR. Some pre-filtering may advantageously be carried out elsewhere in the signalling network so that the apparatus does not need to transparently carry the entire HLR signalling load.
3. Using IN or Camel techniques.

The embodiment shown in Figures 1 and 2 provides several advantages over those other methods:
Simplicity. Allows standalone implementation of advanced services without interfering with any existing network nodes other than the HLR.

Similarity to the related technique for intercepting incoming SMS, which cannot be done using IN or presently available Camel techniques. The forwarding of SRI and SRI-SM can advantageously be applied together as modifications to an HLR, enabling complete solution of the problems of accessing incoming calls and texts for the purpose of providing advanced text and voice services.

Privacy. The aliasing of the SRI and SRI-SM responses provides increased security and privacy, because the true VLR location of a subscriber is no longer disclosed outside the subscriber's home network.

The operation of the apparatus shown in the Figures will now be described.

Once the SRI has been captured by forwarding it from the HLR to the SMS Router 4, the router can provide an 'alias' response directly to the GMSC which indicates that the routing address to which the associated voice call should be sent is the address of the apparatus. The SMS Router creates said alias response by dynamically assigning an 'Alias MSRN' (Mobile Station Roaming Number) from a pool of network addresses which, in a preferred embodiment, correspond to DDI channels on the voice switch SSW 5 that forms part of the apparatus.

The voice switch 5 preferably has the following characteristics:

Programmable, such that it can receive and store notifications from the SMS Router indicating dynamically assigned pairings between an alias MSRN number (the DDI number on which it may receive a call) and the actual B number which the original caller dialled.

Able to receive a call on a DDI channel, and to optionally outdial a partner call on the associated B number with which it has been previously notified.

Able to initiate a third call leg to an external recording equipment, or to record audio within the switch itself.

Able to sum the audio from incoming and outgoing call legs of the routed call, and to feed the summed audio out of the third call leg or to internal recording resource.

The voice switch or an attached external recording equipment such as a fastIP preferably has the following characteristics:
Able to store the recorded audio, and to replay on demand, preferably subject to successful security checks, the recorded audio.
Able to tag the recording with caller and/or called party details, passed for example in the dialled number string.
Able to transmit recorded audio on demand to an external platform such as an email gateway, preferably subject to successful security checks.

The pairing of the assigned number and the original B number is notified by the SMS Router to the switch 5, which stores the pairing. In the case of multiple SMS Routers 4 able to perform a dynamic assignment, the pool of available channel numbers may be divided amongst the SMS Routers.

On receiving the Alias response, the GMSC will forward the call to the switch by dialling the provided alias number. The call will arrive on the corresponding DDI channel of the switch. The switch looks up the stored DDI number pairing and determines the original B number. If no match to the incoming DDI number is found the call is preferably rejected. The switch then outdials the B number and connects the call transparently through.

Before call set-up and/or while the call is in progress, and optionally dependent on external factors such as CLI, DDI number, additional notification info from the SMS Router or other factors, the switch may perform one or more advanced services on the call. An example service is call-recording, which preferably involves audio summation within the switch, and outdial to an external IP platform for recording. Alternative implementations are possible. Other services could include call divert, call barring, or playing an announcement to the caller (eg 'I am in a meeting, please leave a message after the tone, or press 1 to be put through anyway.') The invention neatly solves the problem of getting access to the call path. The list of service possibilities is then endless.

In a preferred minimal embodiment, the allocation of alias MSRNs for the purpose of routing calls to the apparatus is done by the SMS Router application. In a larger system, where the number of SMS routers required exceeds one, allocation can still be done by the SMS routers provided that the available alias number space is divided up between the SMS Routers in a non-overlapping fashion. Alternatively, a node such as an SCP (Service Control Point) providing centralised intelligence may be used. A suitable platform is the Telsis SMS SCP (RTM), which can accept connections from and control a large number of SMS Routers. If an SCP is used, then the dynamic allocation of numbers is preferably implemented on the SCP, removing the need for division of the number pool between multiple SMS Routers. Communication of allocated numbers is then preferably passed directly between the SCP and the voice switch.

Although equipments 2, 3, 4, 5, 6 and 7 are shown as separate equipment entities, in alternative embodiments the funcationality of two or more of the equipments may be provided as a single equipment entity.

In so far as the embodiment(s) of the invention described above may be implemented, at least in part, using software controlled processing apparatus, it will be appreciated that a computer program providing such software control and a storage medium by which such a computer program is stored are envisaged as aspects of the invention.

## Claims

1. Telecommunications services apparatus for use with a mobile telecommunications network wherein the apparatus is configured to receive a routing information request message (10, 12) that is addressed to a HLR (3) and contains a destination number (8), the apparatus being further configured to provide a response (18) to the routing information request message such that an associated voice call addressed to the first destination number is routed to the apparatus, wherein, in use, the apparatus is (i) adapted to receive a routing information request message forwarded to the apparatus by the HLR, is (ii) adapted to filter routing information request messages addressed to the HLR before the messages reach the HLR, or is (iii) adapted to receive a routing information request message which has been selectively ported out to the apparatus based on the destination number.

2. Telecommunications services apparatus as claimed in claim 1 which is capable of providing enhanced voice services.

3. Telecommunications services apparatus as claimed in claim 2 in which the enhanced voice services comprise call recording (6).

4. Telecommunications services apparatus as claimed in claim 2 in which the enhanced voice services comprise intelligent re-direction.

5. Telecommunications services apparatus as claimed in any preceding claim in which the routing information request message is a MAP Send Routing Information (SRI) message (10).

6. Telecommunication services apparatus as claimed in any preceding claim which is configured to query the HLR (3) using a send routing information message (13) in order to determine a network node address (8) for onward routing of the voice call.

7. Telecommunications services apparatus as claimed in claim 6 which is configured to route the voice call onward to the network node address (8).

8. Telecommunications service apparatus as claimed in any preceding claim which comprises an SMS router (4).

9. Telecommunications services apparatus as claimed in any preceding claims which comprises a Voice Services Switch (SSW) (5).

10. Telecommunications services apparatus as claimed in any preceding claim which comprises an Intelligent Peripheral (IP) (6).

11. A telecommunications network comprising the telecommunications services apparatus as claimed in any of claims 1 to 10, and further comprising a HLR (3) and a switching centre (5).

12. A telecommunications network as claimed in claim 11 in which the HLR (3) is configured to identify those subscribers who are to benefit from enhanced voice services, or from a class of service that includes enhanced voice services.

13. A telecommunications network as claimed in claim 12 in which for each sending routing information request message (13) received (except for those originating from the apparatus) the HLR (3) is operative to determine whether the associated destination number (8) has the necessary class of service, and if the necessary class of service is detected the HLR is configured to forward the message to the apparatus.

14. A telecommunications network as claimed in claim 11 in which the telecommunications services apparatus is place logically in-line with the HLR (3) so that the apparatus can filter and process selected messages before reaching the HLR.

15. A telecommunications network as claimed in any claims 11 to 14 in which the switching centre comprises a GMSC (2).

16. A method of obtaining access to, or intercepting, voice calls on behalf of a recipient subscriber, the method employing a telecommunications services apparatus and the method comprising
(i) forwarding from a HLR (3) a routing information request message (12) to the telecommunications services apparatus, or
(ii) the telecommunications services apparatus filtering a routing information request message addressed to the HLR before the messages reach the HLR, or
(iii) selectively porting out to the telecommunications services apparatus a routing information request based on the number of the recipient subscriber,
and the telecommunications services apparatus replying (18) to the routing information request on behalf of the HLR so that the call is routed through said apparatus.

17. A data carrier provided with instructions to control a data processor of telecommunications services equipment and the instructions being such that, in use, when loaded onto the telecommunications services equipment, the data processor provides a response to a routing information request addressed to a HLR such that an associated voice call addressed to a destination number is routed to the apparatus.
